**Europäisches Patentamt**

**European Patent Office**

**Office européen des brevets**

(19)

(11) Veröffentlichungsnummer: **0 170 138**
**B1**

(12) **EUROPÄISCHE PATENTSCHRIFT**

(45) Veröffentlichungstag der Patentschrift:
10.05.89

(51) Int. Cl.⁴: **H 02 H 3/05**

(21) Anmeldenummer: **85108767.6**

(22) Anmeldetag: **13.07.85**

(54) Schutzeinrichtung für ein elektrisches Netz.

(30) Priorität: **31.07.84 CH 3694/84**

(43) Veröffentlichungstag der Anmeldung:
**05.02.86 Patentblatt 86/6**

(45) Bekanntmachung des Hinweises auf die Patenterteilung:
**10.05.89 Patentblatt 89/19**

(84) Benannte Vertragsstaaten:
**CH DE FR GB LI SE**

(56) Entgegenhaltungen:
**DE-A-3 132 730**

**REVUE GENERALE DE L'ELECTRICITE, Nr. 6, Juin
1982, Seiten 428-434, Paris, FR; J. LOUBET: "Le
système de protection intégré numérique des
centrales 1300 MW"
CONTROL SCIENCE AND TECHNOLOGY FOR THE
PROGRESS OF SOCIETY, Proceedings of the
Eighth Triennial World Congress of the
International Federation of Automatic Control,
Band 3, 24-28 August 1981, Seiten 1721-1725, Kyoto,
JP; O. MALIK et al.: "Design concepts for a
distributed microprocessor-based transmission
line control and monitoring system"
BROWN BOVERI REVIEW, Band 70, Nrs. 1,2, Januar-
Februar 1983, Seiten 101,102, Baden, CH; W.
STEFAN et al.: "Comprehensive protection of the
300 kV power system in Kuwait"**

(73) Patentinhaber: **BBC Brown Boveri AG,
Haselstrasse, CH- 5401 Baden (CH)**

(72) Erfinder: **Köppl, Georg, Waldmatt 14, CH- 5242 Birr
(CH)**

**Beschreibung**

Bei der Erfindung wird ausgegangen von einer Schutzeinrichtung für ein elektrisches Netz nach den Oberbegriffen der Patentansprüche 1 und 2.

Mit diesen Oberbegriffen nimmt die Erfindung auf einen Stand der Technik Bezug, wie er etwa in den Brown Boveri Mitt. 1/2-83, Bd. 70, Seiten 101 bis 102 beschrieben ist. Bei der bekannten Schutzeinrichtung werden die zu schützenden Objekte eines Energieverteilungsnetzes, wie etwa die von einer Sammelschiene abgehenden Abzweige, jeweils durch ein Schutzrelais gesichert, welches bei Auftreten eines Fehlers an einem der Objekte auf eine zwischen diesem Objekt und dem verbleibenden Netz vorgesehene Schaltstelle wirkt. Zur Erhöhung der Redundanz einer solchen Schutzeinrichtung ist es notwendig, für jedes zu schützende Objekt ein weiteres Schutzrelais vorzusehen.

Aus "Revue Generale de l'Electricité" Nr. 6, Juin 1982, S. 428 - 434, insbesondere Abschnitt 3, ist ferner eine Schutzeinrichtung für Kernkraftwerke bekannt, bei der vier redundante Datenerfassungs- und -verarbeitungs-Einheiten (UTAP) vorgesehen sind. Jede dieser Einheiten empfängt die Ausgangssignale einer ebenfalls vierfach ausgeführten Gruppe von Gebern. Die vier genannten Einheiten kommunizieren miteinander und können über zwei Logikeinheiten (ULS), in denen die Ausgangssignale der vier genannten Einheiten verknüpft werden, auf Betätigungsorgane eines Sicherheitssystems wirken. Hierdurch wird zwar eine hohe Redundanz der auf das Sicherheitssystem wirkenden Schutzeinrichtung erreicht, jedoch bedingt dies einen verhältnismässig grossen apparativen Aufwand.

Die Erfindung, wie sie in den Patentansprüchen 1 und 2 definiert ist, löst die Aufgabe, die Redundanz bekannter Schutzeinrichtungen, bei gleichbleibender Zahl von Schutzrelais zu erhöhen.

Bei der erfindungsgemässen Schutzeinrichtung wird durch die Vorschaltung von Speichern vor die Schutzrelais die sukzessive Verarbeitung der von mehreren Objekten anfallenden Daten in einem Schutzrelais ermöglicht. Hierdurch lässt sich die Redundanz der Schutzeinrichtung bei gleichbleibender Anzahl an Schutzrelais hinsichtlich des Ausfalls eines beliebigen der Schutzrelais mindestens verdoppeln. Vorteilhafte Weiterbildungen der Erfindung sind in den abhängigen Ansprüchen angegeben.

Die Erfindung wird nachfolgend anhand eines in der Zeichnung beschriebenen Ausführungsbeispiels näher erläutert.

Hierbei zeigt:

Fig. 1    einen Ausschnitt aus einem Übersichtsschaltbild einer Schaltanlage mit einer ersten Ausführungsform der erfindungsgemäss ausgebildeten Schutzeinrichtung,

Fig. 2    den zeitlichen Verlauf eines den Zustand eines Abzweiges der Schaltanlage gemäss Fig. 1 erfassenden Strom- oder Spannungswandlersignals $S_a$ sowie den zeitlichen Ablauf des in einem Schutzrelais der Schutzeinrichtung gemäss Fig. 1 gebildeten Signals Ta,

Fig. 3    einen Ausschnitt aus einem Übersichtsschaltbild der Schaltanlage gemäss Fig. 1 mit einer zweiten Ausführungsform der erfindungsgemäss ausgebildeten Schutzeinrichtung,

Fig. 4    einen Ausschnitt aus einem Übersichtsschaltbild der Schaltanlage gemäss Fig. 1 mit einer dritten Ausführungsform der erfindungsgemäss ausgebildeten Schutzeinrichtung, und

Fig. 5    einen Ausschnitt aus einem Übersichtsschaltbild einer weiteren Schaltanlage mit einer vierten Ausführungsform der erfindungsgemäss ausgebildeten Schutzeinrichtung.

In allen Figuren bezeichnen gleiche Bezugszeichen einander entsprechende Teile.

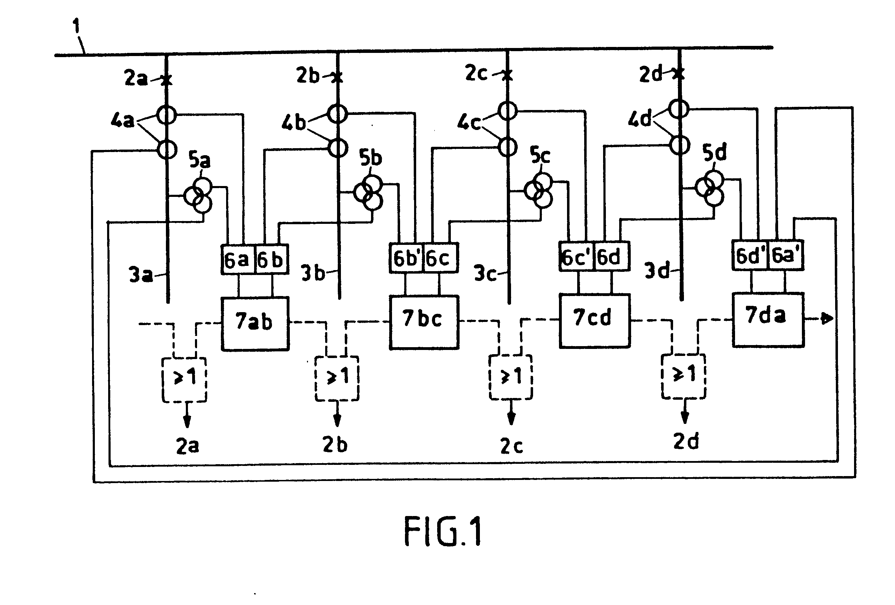

Bei dem in Fig. 1 dargestellten Ausschnitt aus einer Schaltanlage bezeichnet 1 eine Sammelschiene, welche über Leistungsschalter enthaltende Schaltstellen 2a, 2b, 2c und 2d mit längs der Sammelschiene 1 aufeinanderfolgenden Abzweigen 3a, 3b, 3c und 3d verbindbar ist. Jedem der Abzweige 3a, ..., 3d sind als Stromwandler 4a, 4b, 4c und 4d sowie als Spannungswandler 5a, 5b, 5c und 5d ausgebildete Messwertgeber zugeordnet, welche den Strom- und Spannungszustand des jeweiligen Abzweiges 3a, 3b, 3c und 3d erfassen und die erfassten Signale an die Eingänge zweier Speicher 6a, 6a'; 6b, 6b'; 6c, 6c' und 6d, 6d' der erfindungsgemässen Schutzeinrichtung legen. Die Ausgänge der Speicher 6a und 6b sind mit den Eingängen eines Schutzrelais 7ab verbunden. In entsprechender Weise sind die Ausgänge der Speicher 6b' und 6c mit den Eingängen eines Schutzrelais 7bc, die Ausgänge der Speicher 6c' und 6d mit den Eingängen eines Schutzrelais 7cd und die Ausgänge der Speicher 6d' und 6a' mit den Eingängen eines Schutzrelais 7da verbunden. Jedes der Schutzrelais 7ab, 7bc, 7cd und 7da weist zwei Ausgänge auf. Ein erster Ausgang des Schutzrelais 7ab und ein zweiter Ausgang des Schutzrelais 7bc stehen beispielsweise über ein nicht bezeichnetes ODER-Glied mit einem nicht bezeichneten Erregerorgan der Schaltstelle 2b in Verbindung. Ein zweiter Ausgang des Schutzrelais 7ab und ein erster Ausgang des Schutzrelais 7da stehen in entsprechender Weise mit der Schaltstelle 2a in Wirkverbindung; ebenso ein erster Ausgang des Schutzrelais 7bc und ein zweiter Ausgang des Schutzrelais 7cd mit der Schaltstelle 2c und ein erster Ausgang des Schutzrelais 7cd und ein zweiter Ausgang des Schutzrelais 7da mit der Schaltstelle 2d. Die Schutzrelais sind also in zyklischer Weise zwischen je zwei der längs der Sammelschiene unmittelbar aufeinanderfolgenden Abzweige geschaltet.

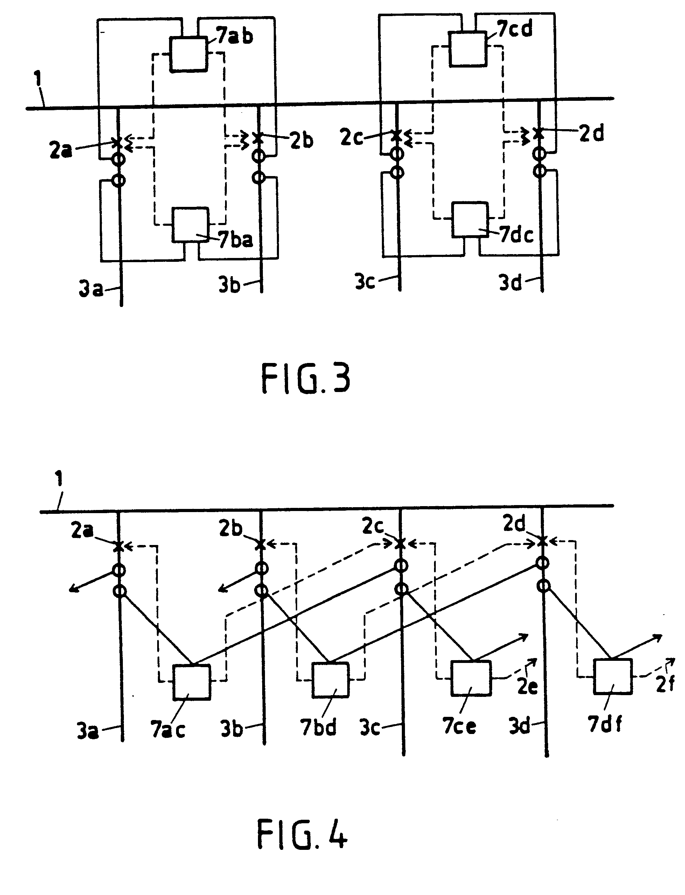

Hierbei bilden die Schaltstelle 2a, die Wirkverbindung von der Schaltstelle 2a zum Schutzrelais 7ab, das Schutzrelais 7ab, die Wirkverbindung vom Schutzrelais 7ab zur Schaltstelle 2b, die Schaltstelle 2b die Wirkverbindung von der Schaltstelle 2b zum Schutzrelais 7bc, das Schutzrelais 7bc, die Wirkverbindung vom Schutzrelais 7bc zur Schaltstelle 2c, die Schaltstelle 2c, die Wirkverbindung von der Schaltstelle 2c zum Schutzrelais 7cd, das Schutzrelais 7cd, die Wirkverbindung vom Schutzrelais 7cd zur Schaltstelle 2d, die Wirkverbindung von der Schaltstelle 2d zum Schutzrelais 7da, das Schutzrelais 7da und die Wirkverbindung vom Schutzrelais 7da zur Schaltstelle 2a einen Ring. Ein solcher Ring kann alle Schutzrelais und Schaltstellen der erfindungsgemässen Schutzeinrichtung umfassen, kann aber auch wie später beim Ausführungsbeispiel gemäss Fig. 3 erläutert wird, lediglich 2 Schutzrelais oder Schaltstellen enthalten. Es ist denkbar, dass mehrere Ringe in einer erfindungsgemässen Schutzeinrichtung vorgesehen sind (Teilring).

Die Wirkungsweise der Schutzeinrichtung ist nun wie folgt:

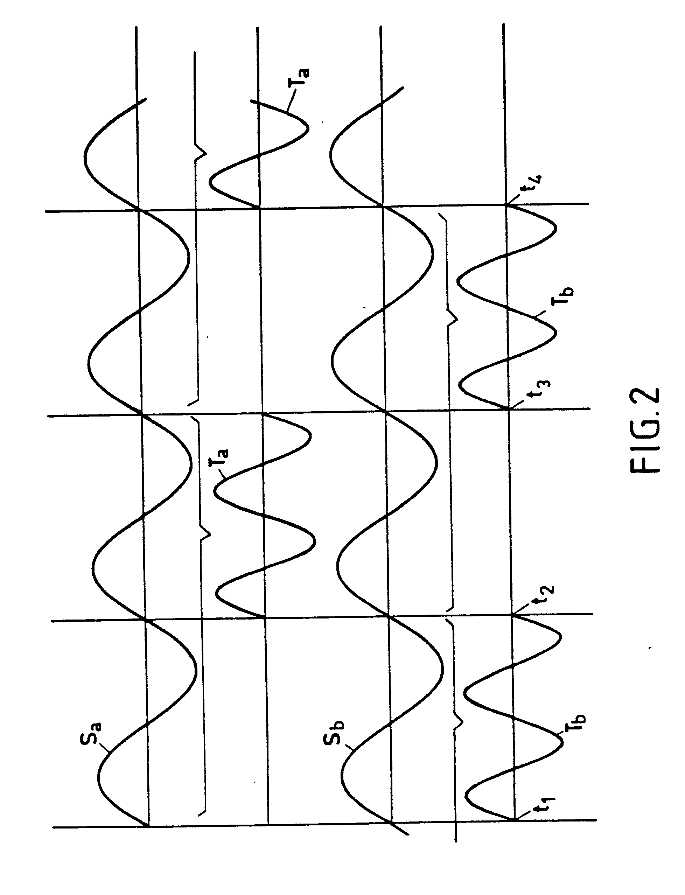

Die jedem der Abzweige 3a, ..., 3d zugeordneten Strom- und Spannungswandler 4a, 4d und 5a, 5d erfassen fortlaufend die Ströme und Spannungen in diesen Abzweigen. Die Verarbeitung der ermittelten Strom- und Spannungssignale kann so wie in Fig. 2 beispielhaft angegeben ist erfolgen:

Vom Zeitpunkt $t_1$ an werden die Strom- und Spannungssignale $S_a$ der Strom- und Spannungswandler 4a, 5a des Abzweiges 3a beispielsweise über einen Zeitraum von zwei vollen Perioden der Netzfrequenz abgetastet, digitalisiert und im Speicher 6a abgelegt. Eine volle Periode später vom Zeitpunkt $t_2$ an werden die bereits im Speicher 6a abgelegten sowie die innerhalb der folgenden vollen Periode noch abzulegenden Daten sukzessive vom Relais 7ab abgerufen und verarbeitet. Jedes Abrufen und Verarbeiten folgt während der auf den Zeitpunkt $t_2$ folgenden vollen Periode der Netzschwingung und führt zur Bildung des Signals $T_a$. Überschreitet das Signal $T_a$ aufgrund eines Fehlers im Abzweig 3a einen Grenzwert, so gibt das Schutzrelais 7ab über das nachgeschaltete ODER-Glied an das nicht dargestellte Erregerorgan der Schaltstelle 2a ein Auslösesignal ab, wodurch die Schaltstelle 2a geöffnet und der Abzweig 3a von der Sammelschiene 1 getrennt wird. Nach Ablauf der zwei vollen Perioden, d. h. zum Zeitpunkt $t_3$, werden die im Speicher 6a abgelegten Daten des Signals $S_a$ gelöscht. In den auf den Zeitpunkt $t_3$ folgenden zwei vollen Perioden werden die im Abzweig 3a gemessenen Signale $S_a$ sodann wieder im Speicher 6a abgelegt.

Zum Zeitpunkt $t_2$ werden nicht nur die bereits im Speicher 6a abgelegten Daten abgerufen sondern gleichzeitig auch die Signale $S_b$ der Strom- und Spannungswandler 4b, 5b des Abzweiges 3b abgetastet, digitalisiert und im Speicher 6b abgelegt. Eine volle Periode später zum Zeitpunkt $t_3$ werden die bereits im Speicher 6b abgelegten sowie die innerhalb der folgenden vollen Periode noch abzulegenden Daten sukzessive vom Relais 7ab abgerufen und verarbeitet. Dieses Abrufen und Verarbeiten erfolgt während der auf den Zeitpunkt $t_3$ folgenden vollen Periode der Netzschwingung und führt zur Bildung des Signals $T_b$. Überschreitet das Signal $T_b$ aufgrund eines Fehlers im Abzweig 3b einen Grenzwert, so gibt das Schutzrelais 7ab über das nachgeschaltete ODER-Glied an das nicht dargestellte Erregerorgan der Schaltstelle 2b ein Auslösesignal ab, wodurch die Schaltstelle 2b geöffnet und der Abzweig 3b von der Sammelschiene 1 getrennt wird. Nach Ablauf von zwei vollen Perioden ab dem Zeitpunkt werden die im Speicher 6b abgelegten Daten des Signals $S_b$ ebenfalls wieder gelöscht. In den auf dem Zeitpunkt $t_4$ folgenden zwei vollen Perioden werden die im Abzweig 3a gemessenen Signale $S_a$ sodann wieder im Speicher 6a abgelegt.

Es ist denkbar, dass das Schutzrelais 7ab ausgefallen ist, so dass bei einem in einem der Abzweige 3a bzw. 3b auftretenden Fehler die Schaltstellen 2a bzw. 2b nun nicht mehr über das Schutzrelais 7ab geöffnet werden können. Ein Schutz des Abzweiges 3a oder 3b ist bei der beschriebenen Schutzeinrichtung dennoch gewährleistet, da die Signale der den Abzweigen 3a oder 3b zugeordneten Strom- und Spannungswandler 4a und 5a bzw. 4b und 5b jeweils auch auf die Schutzrelais 7da bzw. 7bc einwirken, so dass beispielsweise bei einem Fehler im Abzweig 3b das Schutzrelais 7bc das Öffnen der Schaltstelle 2b bewirken wird.

Bei der Ausführungsform gemäss Fig. 3 sind zwischen je zwei der Abzweige, z. B. 3a und 3b bzw. 3c und 3d, jeweils je zwei Schutzrelais, z. B. 7ab und 7ba bzw. 7cd und 7dc, angeordnet. Eine solche Ausführungsform ist besonders übersichtlich und lässt sich bei einer geraden Anzahl von Abzweigen realisieren. Aus Gründen einer einfacheren Darstellung sind hierbei wie auch bei der Ausführungsform gemäss Fig. 4 die in einem der Abzweige, z. B. 3a, einem der Schutzrelais, z. B. 7ab, zugeordneten Meßstellen von Strom- und Spannungswandler als Kreis dargestellt und sind die dem Schutzrelais, z. B. 7ab, vorgeschalteten Speicher weggelassen.

Bei der Ausführungsform gemäss Fig. 4 ist jedes der Schutzrelais, z. B. 7ac jeweils zwischen zwei Abzweigen, z. B. 3a, 3c angeordnet, zwischen denen sich ein dritter Abzweig, z. B. 3b, von längs der Sammelschiene 1 unmittelbar aufeinanderfolgenden Abzweigen, z. B. 3a, 3b, 3c, befindet. Eine solche Ausführungsform lässt sich mit Vorteil bei einer ungeraden Anzahl von Abzweigen ausführen und bietet insbesondere bei gegenläufig abgehenden Abzweigen, z. B. 3a und 3c nach unten und 3b und 3d nach oben, den Vorteil einer kompakten Anordnung. Es ist natürlich auch denkbar, dass sich bei dieser Ausführungsform zwischen je zwei einem Schutzrelais zugeordneten Abzweigen zwei oder mehr Abzweige befinden.

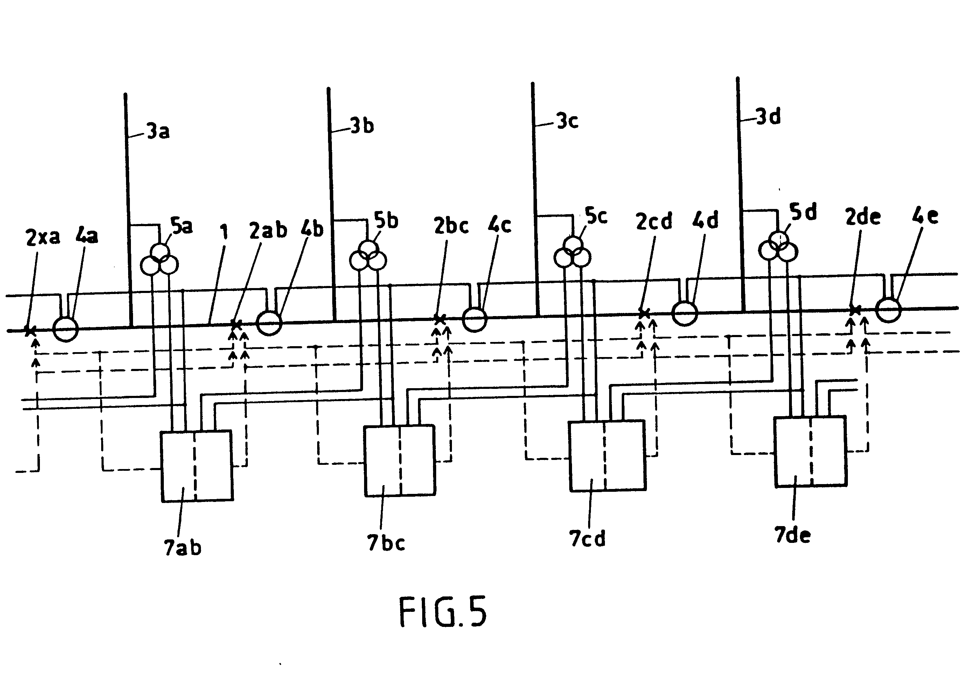

In Fig. 5 ist in einer Schaltanlage mit einer beispielsweise als Ring schaltbaren Sammelschiene 1 eine weitere Ausführungsform der erfindungsgemässen Schutzeinrichtung dargestellt. Bei dieser Sammelschiene befindet sich zwischen je zwei längs der Sammelschiene unmittelbar aufeinanderfolgenden Abzweigen, z. B. 3a und 3b, 3b und 3c, 3c und 3d, jeweils eine Schaltstelle, z. B. 2ab, 2bc, 2cd. Jeder der Abzweige, z. B. 3a bzw. 3d, ist daher über zwei Schaltstellen, z. B. 2xa und 2ab bzw. 2cd und 2de, aus der Sammelschiene schaltbar. Auch bei dieser Ausführungsform wirken die Meßstellen von Strom- und Spannungswandler, z. B. 4a, 5a und 4b, 5b, von je zwei der Abzweige, z. B. 3a und 3b, auf ein diesen beiden Abzweigen zugeordnetes Schutzrelais, z. B. 7ab. Im Gegensatz zu den vorstehend beschriebenen Ausführungsformen sind bei dieser Ausführungsform die Stromwandler, z. B. 4a und 4b, in die Sammelschiene geschaltet und wirkt jede der gestrichelt dargestellten Wirkverbindungen jedes der Schutzrelais, z. B. 7ab, gleichzeitig auf beide einer der Abzweige z. B. 3a, aus der Sammelschiene 1 trennenden Schaltstellen, z. B. 2xa, 2ab.

Die erfindungsgemässe Schutzeinrichtung lässt sich nicht nur in den beschriebenen Schaltanlagen anwenden, sondern ist vielmehr auch mit Vorteil in Anlagenkonfigurationen mit beispielsweise 1 1/2-Schalteranordnung, 2-Schalteranordnung oder Sammelschienenanordnung mit Umgehungsschienen einsetzbar.

Ferner ist die erfindungsgemässe Schutzeinrichtung allgemein verwendbar in Energieverteilungsnetzen, z. B. für Leitungsabschnitte, die durch Differentialrelais geschützt sind. Solche Abschnitte sind zum Beispiel dadurch gegeben, dass bei der Ausführungsform gemäss Fig. 3 anstelle der über die Sammelschiene erfolgenden Verbindung zwischen den Schaltstellen 2a und 2b sich eine Übertragungsleitung befindet. In diesem Fall sind die Schutzrelais 7ab und 7ba als Differentialschutzrelais auszubilden.

Die in jedem der Abzweige, z. B. 3a, vorgesehenen Strom- und Spannungswandler, z. B. 4a und 5a, werden üblicherweise pro Schutzrelais, z. B. 7ab, 7da, eine Meßstelle aufweisen.

Anstelle von zwei Schutzrelais können auch drei oder auch mehr Schutzrelais einem Abzweig bzw. einem zu schützenden Objekt zugeordnet werden. In diesem Fall erfasst jedes der Schutzrelais die Zustände von drei oder mehr Abzweigen bzw. Schutzobjekten und steht in Wirkverbindung mit jeder der Schaltstellen, welche diese Abzweige bzw. Schutzobjekte mit der Sammelschiene bzw. dem verbleibenden Netz verbindet. Hierdurch wird bei gleichbleibender Zahl von Schutzrelais die Redundanz weiter erhöht.

Die Schutzrelais aller Abzweige einer Sammelschiene können lokal in einem Schrank oder irgend einem anderen Raum konzentriert werden, wodurch es ohne weiteres möglich ist aus den von allen Abzweigen vorhandenen Strömen sowie deren Richtungen die Stromsumme zu bilden. Damit ist es möglich, die Funktion der Stromwandler zu überwachen und darüber hinaus einen äusserst einfachen und kostengünstigen Sammelschienenschutz zu realisieren.

**Patentansprüche**

1. Schutzeinrichtung für ein elektrisches Netz mit mindestens drei zu schützenden, jeweils über mindestens eine Schaltstelle (z. B. 2a, 2b, 2c) aus dem Netz trennbaren Objekten (z. B. Abzweige 3a, 3b, 3c), bei der die Schaltstellen (z. B. 2a, 2b, 2c) jeweils in Wirkverbindung mit mindestens einem den Zustand des zu schützenden Objektes (z. B. 3a, 3b, 3c) erfassenden Schutzrelais (z. B. 7ab, 7bc, 7cd) stehen, gekennzeichnet durch folgende Merkmale:

- die Anzahl der Schutzrelais (z. B. 7ab, 7bc, 7cd) entspricht der Anzahl der zu schützenden Objekte (z. B. 3a, 3b, 3c)
- jedem der zu schützenden Objekte (z. B. 3b) sind mindestens zwei Schutzrelais (z. B. 7ab, 7bc) zugeordnet und jedem der Schutzrelais (z. B. 7ab) sind mindestens zwei zu schützende Objekte (z. B. 3a, 3b) zugeordnet;
- jedem der Schutzrelais (z. B. 7ab) sind mindestens zwei Speicher (z. B. 6a, 6b) vorgeschaltet, deren Eingänge jeweils mit den Ausgängen von Messwertgebern (z .B. Strom- und Spannungswandler 4a und 5a, 4b und 5b) der zu schützenden Objekte (z. B. 3a, 3b) verbunden sind, und deren Ausgänge auf die Eingänge des jeweils zugeordneten Schutzrelais (z. B. 7ab) wirken;
- ein erstes Schutzrelais (z. B. 7ab) erfasst über die vorgeschalteten Speicher (z. B. 6a, 6b) die Zustände mindestens eines ersten und zweiten Objektes (z. B. 3a, 3b);
- ein zweites Schutzrelais (z. B. 7bc) erfasst über die vorgeschalteten Speicher (z. B. 6b', 6c) den Zustand des ersten oder zweiten Objektes (z. B. 3b) sowie den Zustand eines dritten (z. B. 3c) Objektes;
- ein drittes (z. B. 7cd) und gegebenenfalls weitere Schutzrelais (z. B. 7da) erfassen über die vorgeschalteten Speicher (z. B. 6c', 6d; 6d', 6a') jeweils den Zustand von mindestens zwei in entsprechender Weise zugeordneten Objekten (z. B. 3c, 3d; 3d, 3a);
- durch die vorgeschalteten Speicher (z. B. 6a, 6b) sind die Daten über die Zustände von mindestens zwei Objekten (z. B. 3a, 3b) sukzessive von dem nachgeschalteten Relais (z. B. 7ab) abrufbar und verarbeitbar;

- jedes der Schutzrelais (z. B. 7ab) steht mit mindestens zwei Schaltstellen (z. B. 2a, 2b) in Wirkverbindung, und zwar mit der jeweils mindestens einen Schaltstelle (z. B. 2a), über die die zu schützenden Objekte (z. B. 3a, 3b), deren Zustände von dem betreffenden Schutzrelais (z. B. 7ab) erfasst werden, an das Netz anschliessbar sind.

2. Schutzeinrichtung für ein elektrisches Netz mit einer geraden Anzahl von zu schützenden, jeweils über mindestens eine Schaltstelle (z. B. 2a, 2b) aus dem Netz trennbaren Objekten (z. B. Abzweige 3b) bei der die Schaltstellen (z. B. 2a, 2b) jeweils in Wirkverbindung mit mindestens einem den Zustand des zu schützenden Objektes (3a, 3b) erfassenden Schutzrelais (z. B. 7ab, 7ba) stehen, gekennzeichnet durch folgende Merkmale:

- die Anzahl der Schutzrelais (z. B. 7ab, 7ba) entspricht der Anzahl der zu schützenden Objekte (z. B. 3a, 3b);
- jedem der zu schützenden Objekte (z. B. 3a) sind mindestens zwei Schutzrelais (z. B. 7ab, 7ba) zugeordnet und jedem der Schutzrelais (z. B. 7ab) sind mindestens zwei zu schützende Objekte (z. B. 3a, 3b) zugeordnet;
- jedem der Schutzrelais (z. B. 7ab) sind mindestens zwei Speicher vorgeschaltet, deren Eingänge jeweils mit den Ausgängen von Messwertgebern der zu schützenden Objekte (z. B. 3a, 3b) verbunden sind, und deren Ausgänge auf die Eingänge des jeweils zugeordneten Schutzrelais (z. B. 7ab) wirken;
- ein erstes und ein zweites Schutzrelais (z. B. 7ab, 7ba) erfassen über die vorgeschalteten Speicher jeweils die Zustände mindestens eines ersten und eines zweiten Objektes (z. B. 3a, 3b);
- bei einer gegebenenfalls vorgesehenen Anzahl von mehr als zwei Objekten erfassen ein drittes und ein viertes Schutzrelais (z. B. 7cd, 7dc) über die vorgeschalteten Speicher jeweils die Zustände mindestens eines dritten und vierten Objektes (3c, 3d) und gegebenenfalls vorgesehene weitere Schutzrelais jeweils die Zustände von in entsprechender Weise zugeordneten Objekten;
- durch die vorgeschalteten Speicher sind die Daten über die Zustände von mindestens zwei Objekten (z. B. 3a, 3b) sukzessive von dem nachgeschalteten Relais (z. B. 7ab) abrufbar und verarbeitbar;
- jedes der Schutzrelais (z. B. 7ab) steht mit mindestens zwei Schaltstellen (z. B. 2a, 2b) in Wirkverbindung, und zwar mit der jeweils mindestens einen Schaltstelle (z. B. 2a), über die die zu schützenden Objekte (z. B. 3a, 3b), deren Zustände von dem betreffenden Schutzrelais (z. B. 7ab) erfasst werden, an das Netz anschliessbar sind.

3. Schutzeinrichtung nach einem der Ansprüche 1 oder 2, dadurch gekennzeichnet, dass jedem der mindestens zwei Objekte drei oder mehr Schutzrelais zugeordnet sind.

4. Schutzeinrichtung nach einem der Ansprüche 1 bis 3, dadurch gekennzeichnet, dass die mindestens zwei Schutzrelais (z. B. 7ab, 7da) in einem Ring angeordnet sind, welcher zumindest teilweise von der ersten Schaltstelle (z. B. 2a), den Wirkverbindungen von erster Schaltstelle zu erstem und zweitem Schutzrelais (z. B. 7ab, 7da), den beiden Schutzrelais (z. B. 7ab, 7da), der Wirkverbindung vom ersten Schutzrelais (z. B. 7ab) zur zweiten Schaltstelle (z. B. 2b) und der zweiten Schaltstelle (z. B. 2b) sowie der Wirkverbindung vom zweiten Schutzrelais (z. B. 7da) zur zweiten Schaltstelle (z. B. 2b) gebildet ist.

5. Schutzeinrichtung nach Anspruch 4, dadurch gekennzeichnet, dass weitere Schutzrelais in einem weiteren Ring angeordnet sind, welcher Ring Schaltstellen und Schutzrelais sowie Wirkverbindungen zwischen diesen Schaltstellen und Schutzrelais enthält.

6. Schutzeinrichtung nach einem der Ansprüche 4 oder 5, dadurch gekennzeichnet, dass bei aufeinanderfolgend angeordneten Abzweigen (z. B. 3a, 3b, 3c) einer Sammelschiene (1) als zu schützende Objekte mindestens eines der Schutzrelais (z. B. 7ab) zwischen unmittelbar aufeinanderfolgenden Abzweigen (z. B. 3a, 3b) angeordnet ist.

7. Schutzeinrichtung nach einem der Ansprüche 4 oder 5 und 1, dadurch gekennzeichnet, dass mindestens eines der Schutzrelais (z. B. 7ac) zwischen Abzweigen (z. B. 3a, 3c) angeordnet ist, zwischen denen sich mindestens ein weiterer Abzweig (z. B. 3b) befindet.

8. Schutzeinrichtung nach einem der Ansprüche 6 oder 7, dadurch gekennzeichnet, dass bei einer Sammelschiene (1) mit jeweils über zwei Schaltstellen (z. B. 2xa, 2ab) aus der Sammelschiene (1) schaltbaren Abzweigen (z. B. 3a) jede der Wirkverbindungen jedes der Schutzrelais (z. B. 7ab) gleichzeitig auf beide Schaltstellen (z. B. 2xa, 2ab) wirkt.

9. Schutzeinrichtung nach einem der Ansprüche 1 bis 8, dadurch gekennzeichnet, dass ein ODER-Glied angeordnet ist, dessen Eingänge mit den Ausgängen von erstem und zweitem Schutzrelais (z. B. 7ab, 7da) verbunden sind und dessen Ausgang mit der mindestens einen zugeordneten Schaltstelle (z. B. 2a) verbunden ist.

**Claims**

1. Protective device for an electric power system comprising at least three objects, for example branches 3a, 3b, 3c, to be protected, which can be isolated from the power system in each case via at least one switching point (for example 2a, 2b, 2c), in which device the switching points (for example 2a, 2b, 2c) are in each case effectively connected to at least one protective relay (for example 7ab, 7bc, 7cd) which detects the condition of the object to be protected (for example 3a, 3b, 3c), characterised by the following features:

- the number of protective relays (for example 7ab, 7bc, 7cd) corresponds to the number of objects to be protected (for example 3a, 3b, 3c)
- each of the objects to be protected (for example 3b) is associated with at least two protective relays (for example 7ab, 7bc) and each of the protective relays (for example 7ab) is associated with at least two objects to be protected (for example 3a, 3b);
- in the incoming circuit of each of the protective relays (for example 7ab), at least two stores (for example 6a, 6b) are connected, the inputs of which are in each case connected to outputs of measurement value transmitters (for example current and voltage transformers 4a and 5a, 4b and 5b) of the objects to be protected (for example 3a, 3b), and the outputs of which act on the inputs of the protective relay (for example 7ab) associated in each case;
- a first protective relay (for example 7ab) detects via the preceding stores (for example 6a, 6b) the conditions of at least one first and second object (for example 3a, 3b);
- a second protective relay (for example 7bc) detects via the preceding store (for example 6b', 6c) the condition of the first or second object (for example 3b) and the condition of a third object (for example 3c);
- a third (for example 7cd) and, if necessary, further protective relays (for example 7da) in each case detect via the preceding stores (for example 6c', 6d; 6d', 6a') the condition of at least two correspondingly associated objects (for example 3c, 3d; 3d, 3a);
- by means of the preceding stores (for example 6a, 6b), the data on the conditions of at least two objects (for example 3a, 3b) can be progressively called up and processed by the subsequent relay (for example 7ab);
- each of the protective relays (for example 7ab) is effectively connected to at least two switching points (for example 2a, 2b), namely to the in each case at least one switching point (for example 2a), via which the objects to be protected (for example 3a, 3b), the conditions of which are detected by the relevant protective relay (for example 7ab), can be connected to the power system.

2. Protective device for an electric power system comprising an even number of objects (for example branches 3a, 3b) to be protected, which can be isolated from the power system in each case via at least one switching point (for example 2a, 2b), in which device the switching points (for example 2a, 2b) are in each case effectively connected to at least one protective relay (for example 7ab, 7ba), which detects the condition of the object to be protected (3a, 3b), characterised by the following features:
- the number of protective relays (for example 7ab, 7ba) corresponds to the number of objects to be protected (for example 3a, 3b);
- each of the objects to be protected (for example 3a) is associated with at least two protective relays (for example 7ab, 7ba) and each of the protective relays (for example 7ab) is associated with at least two objects to be protected (for example 3a, 3b);
- each of the protective relays (for example 7ab) is preceded by at least two stores the inputs of which are in each case connected to the outputs of measurement value transmitters of the objects to be protected (for example 3a, 3b) and the outputs of which act on the inputs of the protective relay (for example 7ab) in each case associated;
- a first and a second protective relay (for example 7ab, 7ba) in each case detect via the preceding stores the conditions of at least one first and one second object (for example 3a, 3b);
- in a number of more than two objects, which may be provided, a third and a fourth protective relay (for example 7cd, 7dc) in each case detect via the preceding stores the conditions of at least one third and fourth object (3c, 3d) and further protective relays which may be provided in each case detect the conditions of correspondingly associated objects;
- by means of the preceding stores, the data on the conditions of at least two objects (for example 3a, 3b) can be progressively called up and processed by the subsequent relay (for example 7ab);
- each of the protective relays (for example 7ab) is effectively connected to at least two switching points (for example 2a, 2b), namely to the in each case at least one switching point (for example 2a), via which the objects to be protected (for example 3a, 3b), the conditions of which are detected by the relevant protective relay (for example 7ab), can be connected to the power system.

3. Protective device according to one of claims 1 or 2, characterised in that each of the at least two objects is associated with three or more protective relays.

4. Protective device according to one of claims 1 to 3, characterised in that the at least two protective relays (for example 7ab, 7da) are arranged in a ring which is formed at least partially by the first switching point (for example 2a), the effective connections from the first switching point to the first and second protective relay (for example 7ab, 7da), the two protective relays (for example 7ab, 7da), the effective connection from the first protective relay (for example 7ab) to the second switching point (for example 2b) and the second switching point (for example 2b), and the effective connection from the second protective relay (for example 7da) to the second switching point (for example 2b).

5. Protective device according to claim 4, characterised in that further protective relays are arranged in a further ring, which ring contains switching points and protective relays and effective connections between these switching points and protective relays.

6. Protective device according to one of claims 4 or 5, characterised in that in the branches, (for example 3a, 3b, 3c), which are successively arranged, of a busbar (1), as objects to be protected, at least one of the protective relays (for example 7ab) is arranged between branches (for example 3a, 3b) directly following one another.

7. Protective device according to one of claims 4 or 5 and 1, characterised in that at least one of the protective relays (for example 7ac) is arranged between branches (for example 3a, 3c) between which at least one further branch (for example 3b) is located.

8. Protective device according to one of claims 6 or 7, characterised in that in a busbar (1) having branches (for example 3a), which can be switched out of the busbar (1) in each case via two switching points (for example 2xa, 2ab), each of the effective connections of each of the protective relays (for example 7ab) acts simultaneously on both switching points (for example 2xa, 2ab).

9. Protective device according to one of claims 1 to 8, characterised in that an OR section is arranged the inputs of which are connected to the outputs of the first and second protective relay (for example 7ab, 7da) and the output of which is connected to the at least one associated switching point (for example 2a).

## Revendications

1. Dispositif de protection pour un réseau électrique comportant au moins trois objets à protéger (par exemple des branchements 3a, 3b, 3c) pouvant être isolés du réseau chacun par l'intermédiaire d'au moins un point de commutation (par exemple 2a, 2b, 2c), dans lequel les points de commutation (par exemple 2a, 2b, 2c) sont chacun connectés activement a au moins un relais de protection (par exemple 7ab, 7bc, 7cd) détectant l'état de l'objet à protéger (par exemple 3a, 3b, 3c), caractérisé par les particularités suivantes:
- le nombre des relais de protection (par exemple 7ab, 7bc, 7cd) correspond au nombre des objets à protéger (par exemple 3a, 3b, 3c);
- à chacun des objets à protéger (par exemple 3b) sont associés au moins deux relais de protection (par exemple 7ab, 7bc) et à chacun des relais de protection (par exemple 7ab) sont associés au moins deux objets à protéger (par exemple 3a, 3b);
- en amont de chacun des relais de protection (par exemple 7ab) sont connectées au moins deux mémoires (par exemple 6a, 6b) dont les entrées sont chaque fois connectées aux sorties de capteurs de mesure (par exemple des transducteurs de courant et de tension 4a et 5a, 4b et 5b) des objets à protéger (par exemple 3a, 3b) et dont les sorties agissent sur les entrées des relais de protection associés respectifs (par exemple 7ab);
- un premier relais de protection (par exemple 7ab) détecte, par l'intermédiaire des mémoires d'amont (par exemple 6a, 6b), les états d'au moins un premier et un deuxième objet (par exemple 3a, 3b);
- un deuxième relais de protection (par exemple 7bc) détecte, par l'intermédiaire des mémoires d'amont (par exemple 6b', 6c), l'état du premier ou du deuxième objet (par exemple 3b), ainsi que l'état d'un troisième objet (par exemple 3c);
- un troisième relais de protection (par exemple 7cd) et, le cas échéant, un relais de protection supplémentaire (par exemple 7da) détectent, par l'intermédiaire des mémoires d'amont (par exemple 6c', 6d; 6d', 6a'), chaque fois l'état d'au moins deux objets (par exemple 3c, 3d; 3d, 3a) associés d'une manière correspondante;
- grâce aux memoires d'amont (par exemple 6a, 6b), les données portant sur les états d'au moins deux objets (par exemple 3a, 3b) peuvent être appelées et traitées successivement par le relais d'aval (par exemple 7ab);
- chacun des relais de protection (par exemple 7ab) est connecté activement à au moins deux points de commutation (par exemple 2a, 2b) en l'occurrence au moins au point de commutation (par exemple 2a) par l'intermédiaire duquel les objets à protéger (par exemple 3a, 3b), dont les états sont détectés par le relais de protection en question (par exemple 7ab), peuvent être connectés au réseau.

2. Dispositif de protection pour un réseau électrique comportant un nombre pair d'objets à protéger (par exemple des branchements 3a, 3b) pouvant être isolés du réseau chaque fois par l'intermédiaire d'au moins un point de commutation (par exemple 2a, 2b), dans lequel les points de commutation (par exemple 2a, 2b) sont chacun connectés activement à au moins un relais de protection (par exemple 7ab, 7ba) détectant l'état de l'objet à protéger (3a, 3b), caractérisé par les particularités suivantes:
- le nombre des relais de protection (par exemple 7ab, 7ba) correspond au nombre des objets à protéger (par exemple 3a, 3b);
- à chacun des objets à protéger (par exemple 3a) sont associés au moins deux relais de protection (par exemple 7ab, 7ba) et à chacun des relais de protection (par exemple 7ab) sont associés au moins deux objets à protéger (par exemple 3a, 3b);
- en amont de chacun des relais de protection (par exemple 7ab) sont connectées au moins deux mémoires dont les entrées sont connectées chaque fois aux sorties de capteurs de mesure des objets à protéger (par exemple 3a, 3b) et dont les sorties agissent sur les entrées des relais de protection (par exemple 7ab) associés respectifs;
- un premier et un second relais de protection (par exemple 7ab, 7ba) détectent, par l'intermédiaire des mémoires d'amont, chaque fois les états d'au moins un premier et un second objet (par exemple 3a, 3b);
- dans le cas d'un nombre éventuellement prévu de plus de deux objets, un troisième et un quatrième relais de protection (par exemple 7cd, 7dc) détectent, par l'intermédiaire des mémoires d'amont, chaque fois les états d'au moins un troisième et un quatrième objet (3c, 3d) et des relais de protection supplémentaires eventuels détectent chaque fois les états d'objets qui y sont associés de manière correspondante;
- grâce aux mémoires d'amont, les données portant sur les états d'au moins deux objets (par exemple 3a, 3b) peuvent être appelées et traitées successivement par le relais d'aval (par exemple 7ab);
- chacun des relais de protection (par exemple 7ab) est en connexion active avec au moins deux points de commutation (par exemple 2a, 2b) en l'occurrence au moins chaque fois avec le point de commutation (par exemple 2a) par l'intermédiaire duquel les objets à protéger (par exemple 3a, 3b), dont les états sont détectés par le relais de protection correspondant (par exemple 7ab), peuvent être connectés au réseau.

3. Dispositif de protection suivant la revendication 1 ou 2, caractérisé en ce qu'à chacun des objets, qui sont au moins au nombre de deux, sont associés trois ou plus de trois relais de protection.

4. Dispositif de protection suivant l'une quelconque des revendications 1 à 3, caractérisé en ce que les relais de protection (par exemple 7ab, 7da), qui sont au moins au nombre de deux, sont disposés en une boucle qui est formée au moins partiellement par le premier point de commutation (par exemple 2a), les connexions actives du premier point de commutation au premier et au deuxième relais de protection (par exemple 7ab, 7ba), les deux relais de protection (par exemple 7ab, 7da), la connexion active du premier relais de protection (par exemple 7ab) au deuxième point de commutation (par exemple 2b) et le deuxième point de commutation (par exemple 2b) ainsi que la connexion active du deuxième relais de protection (par exemple 7da) au deuxième point de commutation (par exemple 2b).

5. Dispositif de protection suivant la revendication 4, caractérisé en ce que des relais de protection supplémentaires sont disposés en une autre boucle qui comprend des points de commutation et des relais de protection, ainsi que des connexions actives entre ces points de commutation et ces relais de protection.

6. Dispositif de protection suivant la revendication 4 ou 5, caractérisé en ce que, dans le cas de branchements successifs (par exemple 3a, 3b, 3c) d'une barre omnibus (1) en tant qu'objets à protéger, au moins un des relais de protection (par exemple 7ab) est disposé entre des branchements (par exemple 3a, 3b) qui se succèdent directement.

7. Dispositif de protection suivant la revendication 4 ou 5 et 1, caractérisé en ce qu'au moins un des relais de protection (par exemple 7ac) est disposé entre des branchements (par exemple 3a, 3c) entre lesquels se trouve au moins un autre branchement (par exemple 3b).

9. Dispositif de protection suivant la revendication 6 ou 7, caractérisé en ce que dans le cas d'une barre omnibus (1) comportant des branchements (par exemple 3a) pouvant être isolés de la barre omnibus (1) chaque fois par l'intermédiaire de deux points de commutation (par exemple 2xa, 2ab), chacune des connexions actives de chaque relais de protection (par exemple 7ab) agit simultanément sur les deux points de commutation (par exemple 2xa, 2ab).

9. Dispositif de protection suivant l'une quelconque des revendications 1 à 8, caractérisé par la présence d'un élément OU, dont les entrées sont connectées aux sorties du premier et du deuxième relais de protection (par exemple 7ab, 7da) et dont la sortie est connectée au point de commutation (par exemple 2a) qui y est au moins associé en particulier.

FIG.1

FIG. 2

FIG.3

FIG.4

FIG.5